# EUROPEAN PATENT APPLICATION

(11) **EP 4 722 551 A1**
(43) Date of publication of application: **08.04.2026**
(21) Application number: 24810721.1
(22) Date of filing: 01.04.2024
(51) Int. Cl.: F16C 29/04

(54) **ROLLING GUIDE DEVICE**

(30) Priority: 25.05.2023 JP 2023086147
(71) Applicant: THK CO., LTD., Minato-ku Tokyo 108-8506 (JP)
(72) Inventor: ANDO, Yoshihiro, Tokyo 108-8506 (JP); IMAMURA, Yu, Tokyo 108-8506 (JP); KANEKO, Ryota, Tokyo 108-8506 (JP)
(74) Representative: Grünecker Patent- und Rechtsanwälte PartG mbB
(86) International application number: PCT/JP2024/013490
(87) International publication number: WO 2024/241713

(57) **Abstract**

On an end portion of a moving member 21 configuring a rolling guide device 10 in the longitudinal direction thereof, a plate-shaped end plate 51, a greasing nipple 52 attached to the end plate 51 on the outer surface side thereof, and a lubricant tank 55 attached to the end plate 51 on the inner surface side thereof are installed, and the lubricant tank 55 constantly has a gap between the lubricant tank 55 and a rolling body 31. When a user performs lubricant charging by pressing a grease gun against the greasing nipple 52, lubricant is applied to the rolling body 31 in a state in which the lubricant tank 55 and the rolling body 31 are in gapless contact with each other by the end plate 51 being elastically deformed by a pressing force of the grease gun. By including the configuration above, the rolling guide device 10 in which a mechanism that applies lubricant to the rolling-body rolling surface of the rolling body is improved is realized.

## Description

### TECHNICAL FIELD

The present invention relates to a rolling guide device.

### BACKGROUND ART

As a mechanical component for guiding a linear movement or a curvilinear movement of a mobile body such as a table, a rolling guide device in which a rolling body such as a wheel, a ball, or a roller is interposed in a guiding portion is used in various fields such as robots, machine tools, semiconductor and liquid crystal manufacturing apparatuses, medical equipment, opening and closing devices because nimble movement can be obtained.

When this type of rolling guide device is used, it is necessary to prevent metals from directly coming into contact with each other by providing satisfactory lubrication, in other words, a film of grease between a rolling body and a rolling-body rolling surface. This is because the wear of the rolling body and the rolling-body rolling surface increases and causes a shortened lifespan when the rolling guide device is used in a grease-free state.

As a lubricant supplying method of the rolling guide device, various approaches exist. For example, there is an approach of performing greasing via a greasing nipple attached to a moving member of the rolling guide device. In general, a greasing nipple is attached to each of end plates attached to both end surfaces of a moving member in the longitudinal direction thereof, and a lubricant supplying route that connects the greasing nipple and a rolling-body circulation route is formed in the moving member and on the side that comes into contact with an end surface of the moving member. When lubricant such as oil and grease is supplied to the greasing nipple, the lubricant is applied to the rolling body via the lubricant supplying route. Patent Literature 1 and the like exist as related-art documents that disclose such a rolling guide device, for example.

### CITATION LIST

### PATENT LITERATURE

Patent Literature 1: Japanese Patent Laid-Open No. 2005-207469

### SUMMARY OF INVENTION

### PROBLEMS TO BE SOLVED BY THE INVENTION

However, a greasing structure of a rolling guide device according to the related-art represented by Patent Literature 1 mentioned above employs a structure that supplies lubricant such as grease from a greasing nipple through a complicated route when the lubricant is applied to a rolling-body rolling surface of a rolling body, and hence there have been problems in terms of cost and operation such as the structure of component parts becoming complicated, the cost of manufacturing a mold, and the leakage of lubricant between parts.

In the related-art, it is difficult to apply a suitable amount of lubricant to a suitable section of the rolling body. Therefore, when necessary lubricant is not applied to the rolling-body rolling surface, for example, a case in which the sliding resistance is greatly affected and the device lifespan of the rolling guide device is adversely affected can be conceived. Conversely, when lubricant is applied to the rolling-body rolling surface more than necessary, adverse effects such as environmental degradation and increase in operational cost also occur.

The present invention has been made in view of the problem that has existed in the related-art described above, and an object thereof is to realize a rolling guide device that reduces manufacturing cost by simplifying component parts for applying lubricant to a rolling-body rolling surface of a rolling body configuring the rolling guide device, maintains a stable operation state of the rolling guide device by applying a suitable amount of lubricant to a suitable section of the rolling body, and is excellent in terms of environment and operational cost by eliminating waste of applied lubricant.

### MEANS FOR SOLVING THE PROBLEMS

A rolling guide device according to the present invention includes a track member that is a long member extending in the longitudinal direction and that is formed by an attachment surface portion serving as an attachment reference with respect to an external member and a pair of wall portions installed upright toward one side from each of both ends of the attachment surface portion, a moving member installed to be movable in a reciprocal manner along the longitudinal direction of the track member, and a plurality of rolling bodies that guide a relative reciprocal movement of the moving member with respect to the track member by being rollably disposed in a space surrounded by the attachment surface portion and the pair of wall portions forming the track member and between the track member and the moving member. The pair of wall portions have wall surfaces facing each other. The wall surfaces each have a rolling-body rolling surface formed in the wall surfaces. The rolling-body rolling surface comes into contact with a rolling-body outer circumferential surface of each of the rolling bodies. In the rolling guide device, a plate-shaped end plate, a greasing nipple attached to an outer surface side of the end plate, and a lubricant tank attached to an inner surface side of the end plate are installed on an end portion of the moving member in the longitudinal direction of the moving member, the lubricant tank constantly has a gap between the lubricant tank and the rolling body, and lubricant is applied, when a user performs lubricant charging by pressing a grease gun against the greasing nipple, to the rolling body in a state in which the lubricant tank and the rolling body are in gapless contact with each other by the end plate being elastically deformed by a pressing force of the grease gun.

### EFFECTS OF THE INVENTION

According to the present invention, it becomes possible to realize the rolling guide device that reduces the manufacturing cost by simplifying the component parts for applying the lubricant to the rolling-body rolling surface of the rolling body configuring the rolling guide device, maintains the stable operation state of the rolling guide device by applying the suitable amount of lubricant to the suitable section of the rolling body, and is excellent in terms of the environment and the operational cost by eliminating waste of the applied lubricant.

### BRIEF DESCRIPTION OF THE DRAWINGS

[Fig. 1] Fig. 1 is a perspective view of a rolling guide device according to the present embodiment viewed diagonally from the front right side above.
[Fig. 2] Fig. 2 is a perspective view of a moving slider configuring the rolling guide device according to the present embodiment viewed diagonally from the rear right side above.
[Fig. 3] Fig. 3 is a transparent view of the rolling guide device according to the present embodiment viewed from the front-surface side.
[Fig. 4] Fig. 4 is a transparent view of the rolling guide device according to the present embodiment viewed from the left-side-surface side.
[Fig. 5] Fig. 5 is an exploded perspective view of the rolling guide device according to the present embodiment.
[Fig. 6] Fig. 6 is a perspective view for describing an end plate, a greasing nipple, and a lubricant tank configuring the moving slider according to the present embodiment.
[Fig. 7] Fig. 7 is a diagram for describing a configuration of the lubricant tank according to the present embodiment in which Fig. 7(a) is a partial perspective view showing a section around where the lubricant tank is installed in the rolling guide device according to the present embodiment, Fig. 7(b) is a partial perspective view showing a state in which a wheel is removed from Fig. 7(a), and Fig. 7(c) is a perspective view showing the lubricant tank according to the present embodiment by itself.
[Fig. 8] Fig. 8 is a bottom view showing how the end plate according to the present embodiment is elastically deformed.
[Fig. 9] Fig. 9 is a partial rear view for describing how the end plate is elastically deformed and the lubricant tank comes into contact with the wheel in the rolling guide device according to the present embodiment in which Fig. 9(a) shows a state before the end plate is elastically deformed and Fig. 9(b) shows a state after the end plate is elastically deformed.
[Fig. 10] Fig. 10 is a transverse sectional view for describing a state in which lubricant is applied to the wheel from the lubricant tank in the rolling guide device according to the present embodiment.
[Fig. 11] Fig. 11 is a schematic view of a state in which the lubricant is applied to the wheel from the lubricant tank in the rolling guide device according to the present embodiment viewed from the lower surface side.
[Fig. 12] Fig. 12 is a partial bottom view showing a main part of the moving slider for describing an effect of the end plate and the lubricant tank included in the rolling guide device according to the present embodiment.
[Fig. 13] Fig. 13 is a view exemplifying an improved structure applicable to the end plate according to the present invention.

### MODE FOR CARRYING OUT THE INVENTION

A suitable embodiment for carrying out the present invention is described below with reference to the drawings. The embodiment described below does not limit the invention according to each claim, and not all of the combinations of the features described in the embodiment are essential for the solving means of the invention

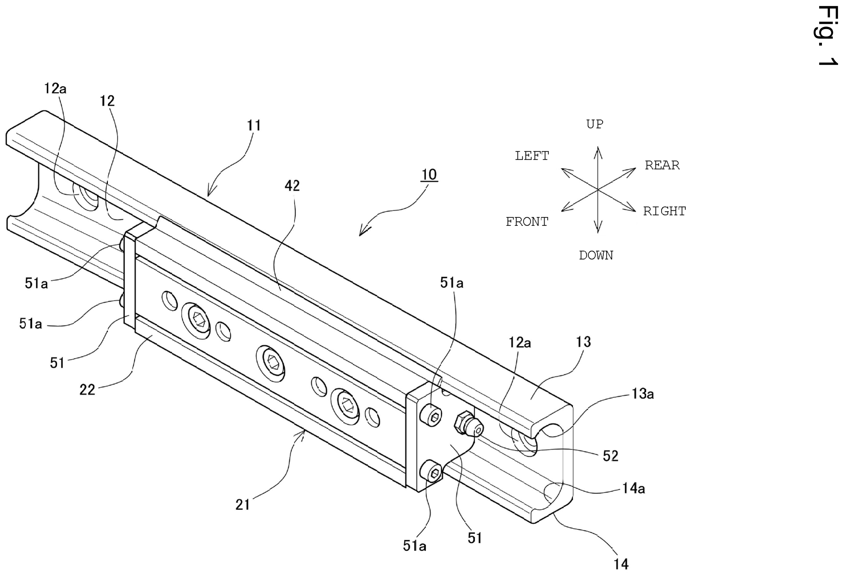

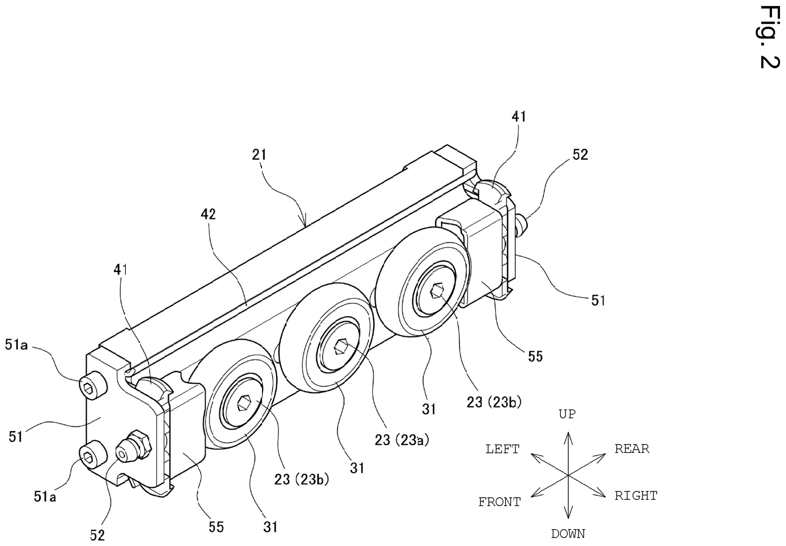

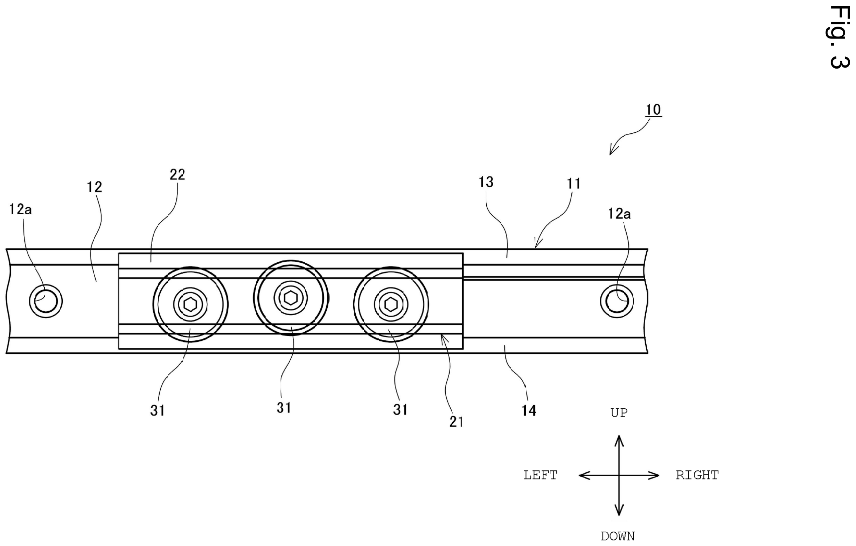

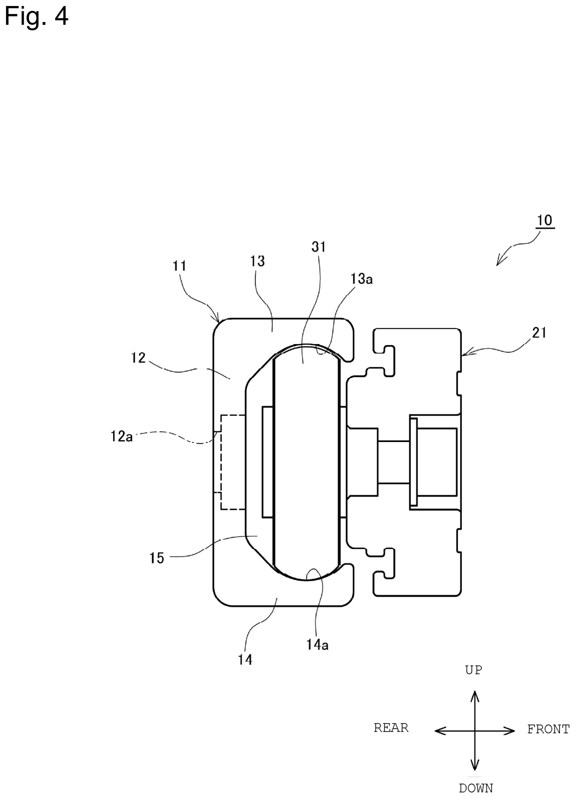

First, a basic configuration of a rolling guide device 10 according to the present embodiment is described with reference to Fig. 1 to Fig. 4. Fig. 1 is a perspective view of the rolling guide device according to the present embodiment viewed diagonally from the front right side above, and Fig. 2 is a perspective view of a moving slider configuring the rolling guide device according to the present embodiment viewed diagonally from the rear right side above. Fig. 3 is a transparent view of the rolling guide device according to the present embodiment viewed from the front-surface side, and Fig. 4 is a transparent view of the rolling guide device according to the present embodiment viewed from the left-side-surface side. In the present specification, the directions of the rolling guide device 10 are defined as shown in Fig. 1 to Fig. 4 for explanatory convenience. However, those directions do not indicate the directions at the time of usage of the rolling guide device 10 according to the present embodiment, and the rolling guide device 10 according to the present embodiment can be used in every posture. In other words, the directions of "front, rear, up, down, left, right" shown in Fig. 1 to Fig. 4 are specified for explanatory convenience only.

As shown in Fig. 1 to Fig. 4, the rolling guide device 10 according to the present embodiment is configured by having a track rail 11 serving as a track member, the moving slider 21 serving as a moving member installed to be movable in a reciprocal manner along the longitudinal direction (in other words, the left and right directions in Fig. 1 to Fig. 3) of the track rail 11, and three wheels 31 serving as a plurality of rolling bodies disposed in a rollable state between the track rail 11 and the moving slider 21.

The track rail 11 is a long member that has a substantially C-like shape in cross-section and extends in the longitudinal direction. As shown in Fig. 4, the track rail 11 of the present embodiment has an attachment surface portion 12 formed to extend in the up-down direction, an upper wall portion 13 serving as a wall portion according to the present invention formed to extend from an upper end of the attachment surface portion 12 to the front side, and a lower wall portion 14 serving as a wall portion according to the present invention formed to extend from a lower end of the attachment surface portion 12 to the front side in side view.

A wheel upper-side rolling surface 13a serving as a rolling-body rolling surface according to the present invention that comes into contact with wheel outer circumferential surfaces (rolling-body outer circumferential surfaces of the present invention) of the wheels 31 is formed on the lower surface side of the upper wall portion 13. Similarly, a wheel lower-side rolling surface 14a serving as a rolling-body rolling surface according to the present invention that comes into contact with the wheel outer circumferential surfaces (the rolling-body outer circumferential surfaces of the present invention) of the wheels 31 is formed on the upper surface side of the lower wall portion 14. The wheel upper-side rolling surface 13a and the wheel lower-side rolling surface 14a are disposed to face each other in side view. The three wheels 31 are disposed in an inner space 15 (the inside of a space according to the present invention) surrounded by the attachment surface portion 12, the upper wall portion 13, and the lower wall portion 14 in a rollable state.

The external shape of the track rail 11 of the present embodiment described above is formed by plastically deforming a metal material by a drawing process. However, the method of forming the track rail 11 is not limited to the drawing process. For example, the appearance shape may be formed by performing a grinding process, a cutting process, and the like on a metal material, or the external shape may be formed by performing a grinding process and the like while controlling surface hardness and internal quality by performing a heat treatment process after plastically deforming the metal material by a drawing process. In other words, the external shape of the track rail 11 that is a track member of the present invention can be formed with use of any processing method.

The track rail 11 of the present embodiment is a member serving as an attachment reference of the rolling guide device 10. Therefore, in the present embodiment, attachment holes 12a such as bolt holes are formed in the attachment surface portion 12 configuring the track rail 11. As a result, fixing and installation of the track rail 11 with respect to an attachment reference surface of a base, a door frame, or the like can be performed with use of the attachment holes 12a.

As shown in Fig. 1 and Fig. 2, the moving slider 21 is a block-like member having a substantially rectangular shape and is installed to be movable in a reciprocal manner along the longitudinal direction of the track rail 11. In the moving slider 21 of the present embodiment, three wheels 31 are disposed on the rear surface side in a rollable state. A movable member that is moved by being guided by the rolling guide device 10 can be installed on the front surface side of the moving slider 21. In the rolling guide device 10 according to the present embodiment, an embodiment example in which the track rail 11 is fixed and installed with respect to the attachment reference surface of the base, the door frame, or the like, and the moving slider 21 is installed to be movable in a reciprocal manner with respect to the track rail 11 has been shown. However, the scope of the present invention is not limited to the above. For example, the moving slider 21 may be fixed to the attachment reference surface, and the track rail 11 may be movable in a reciprocal manner with respect to the moving slider 21.

The wheels 31 are members that guide the relative reciprocal movement of the moving slider 21 with respect to the track rail 11 by being rollably disposed in the substantially C-like inner space 15 configuring the track rail 11 and between the track rail 11 and the moving slider 21.

More specifically, regarding the wheels 31 of the present embodiment, three wheels 31 are disposed on the rear surface side of the moving slider 21 in a rollable state. As it is clear by referring to Fig. 3 and Fig. 4 in comparison with each other, one wheel 31 positioned in the center out of the three wheels 31 is disposed to be in contact with the wheel upper-side rolling surface 13a and to not be in contact with the wheel lower-side rolling surface 14a by having a gap with respect to the wheel lower-side rolling surface 14a. Meanwhile, the two wheels 31 positioned on the left and right out of the three wheels 31 are disposed to be in contact with the wheel lower-side rolling surface 14a and to not be in contact with the wheel upper-side rolling surface 13a by having a gap with respect to the wheel upper-side rolling surface 13a. The following occurs by disposing the three wheels 31 such that the positions thereof are staggered in the up-down direction in front view as above. For example, when the moving slider 21 moves to the right side of the plane of the paper with respect to the track rail 11 in Fig. 3, the one wheel 31 positioned in the center rotates in a counterclockwise manner with respect to the plane of the paper of Fig. 3, and the two wheels 31 positioned on the left and right rotate in a clockwise manner with respect to the plane of the paper of Fig. 3. Conversely, when the moving slider 21 moves to the left side of the plane of the paper with respect to the track rail 11 in Fig. 3, the one wheel 31 positioned in the center rotates in a clockwise manner with respect to the plane of the paper of Fig. 3, and the two wheels 31 positioned on the left and right rotate in a counterclockwise manner with respect to the plane of the paper of Fig. 3. As above, by disposing the three wheels 31 to be staggered with each other in the up-down direction in front view, the moving slider 21 that performs a relative linear movement along the longitudinal direction of the track rail 11 can perform a suitable reciprocal linear movement while suitably receiving a moment load.

In the present embodiment shown in Fig. 1 to Fig. 4, a configuration example in which the one wheel 31 positioned in the center is disposed to be in contact with the wheel upper-side rolling surface 13a and the two wheels 31 positioned on the left and right are disposed to be in contact with the wheel lower-side rolling surface 14a has been shown. However, the scope of the present invention is not limited to the above. For example, a configuration disposed to be opposite from the present embodiment, that is, a configuration in which the one wheel 31 positioned in the center is disposed to be in contact with the wheel lower-side rolling surface 14a and the two wheels 31 positioned on the left and right are disposed to be in contact with the wheel upper-side rolling surface 13a may be employed.

In the present invention, a configuration example in which four or more wheels 31 are disposed with respect to the rear surface side of the moving slider 21 is also possible. In the case of this configuration example, it is preferred adjacent wheels 31 be disposed to come into contact with the wheel upper-side rolling surface 13a and the wheel lower-side rolling surface 14a in a staggered manner.

The wheel in the present invention is a wheel member that is attached to a rotational shaft in a rotatable state. A rolling contact surface of the wheel member with respect to a counterpart member is configured by any of a horizontal surface, a convex curved surface, and a concave curved surface. In the present embodiment, a case where the rolling contact surfaces of the wheels 31 are formed as convex curved surfaces is exemplified (see Fig. 4).

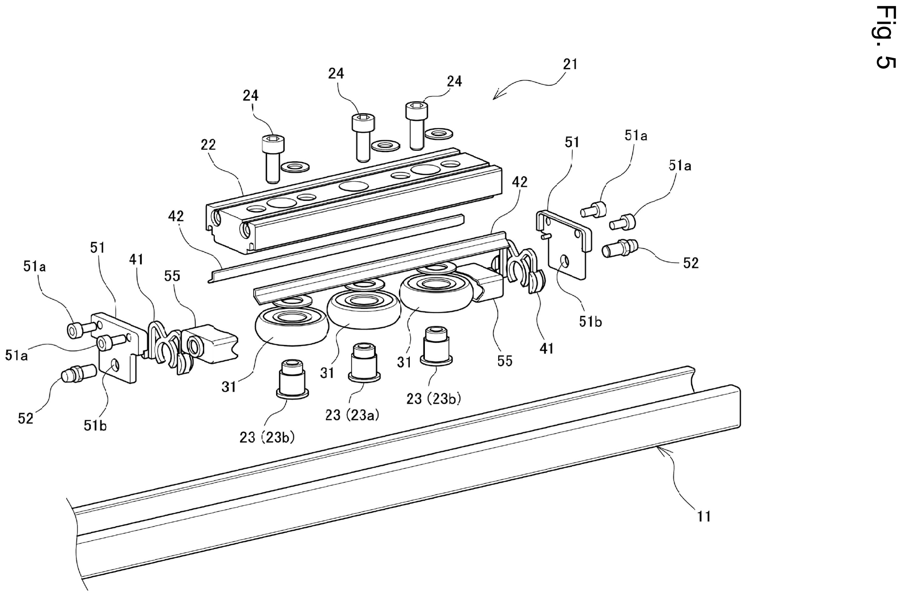

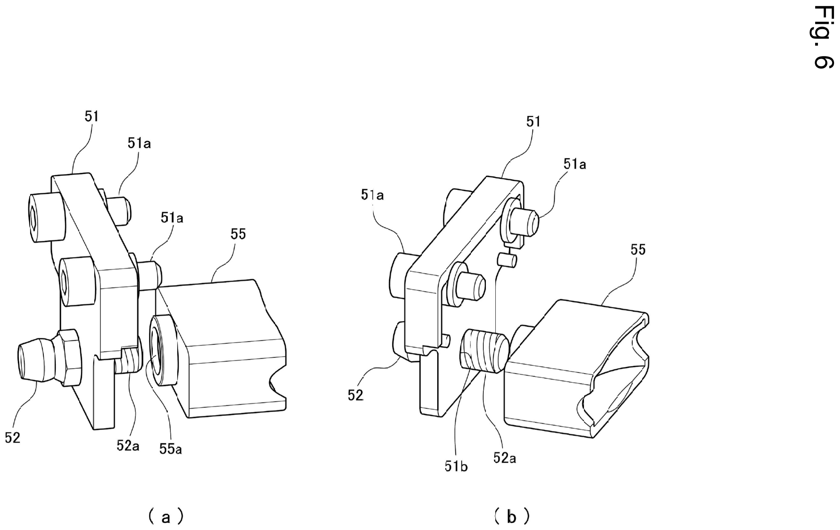

Next, a specific configuration of the moving slider 21 according to the present embodiment is described by adding Fig. 5 and Fig. 6 to the reference drawings. Here, Fig. 5 is an exploded perspective view of the rolling guide device according to the present embodiment. Fig. 6 is a perspective view for describing an end plate, a greasing nipple, and a lubricant tank configuring the moving slider according to the present embodiment. In Fig. 6, Fig. 6(a) is a perspective view viewed from the upper right side, and Fig. 6(b) is a perspective view viewed from the upper left side.

As shown in Fig. 5, the moving slider 21 according to the present embodiment has a slider main-body portion 22 having a substantially rectangular shape, and the wheels 31 are installed on the slider main-body portion 22 in a rollable state by attachment pins 23 and bolts 24. Out of the attachment pins 23, the attachment pin 23 that attaches the wheel 31 disposed in the center is an eccentric attachment pin 23a, and the attachment pins 23 that attach two wheels 31 disposed on the left and the right are fixing attachment pins 23b. In other words, a rotational shaft of the wheel 31 disposed in the center is an eccentric shaft, and the position adjustment of the wheel 31 can be performed by rotating the eccentric attachment pin 23a serving as the eccentric shaft. Therefore, as shown in Fig. 3, in the present embodiment, the three wheels 31 are disposed side by side in the left-right direction, but rotational shafts of the two wheels 31 disposed on the left and right are fixed shafts and the rotational shaft of the one wheel 31 disposed in the center is the eccentric shaft, and hence preload adjustment and the like of the three wheels 31 with respect to the track rail 11 can be performed by moving the position of the wheel 31 disposed in the center upward.

On each of end portions of the slider main-body portion 22 according to the present embodiment in the longitudinal direction thereof, a plate-shaped end plate 51, a greasing nipple 52 attached to the end plate 51 on the outer surface side thereof, and a lubricant tank 55 attached to the end plate 51 on the inner surface side thereof are installed.

The end plate 51 is installed by being fixed to the end portion of the slider main-body portion 22 in the longitudinal direction thereof by bolts 51a. As shown in Fig. 6, an external thread 52a is cut in the greasing nipple 52 attached to the end plate 51 on the outer surface side thereof, an attachment hole 51b of the greasing nipple 52 in the end plate 51 is a through hole, and an internal thread is cut in the attachment hole 55a of the greasing nipple 52 in the lubricant tank 55. Therefore, the end plate 51, the greasing nipple 52, and the lubricant tank 55 are fixed and connected to each other as a result of threaded joining being performed by the internal and external threads of the greasing nipple 52 and the lubricant tank 55 in a state in which the greasing nipple 52 and the lubricant tank 55 sandwich the end plate 51 therebetween.

In the moving slider 21 according to the present embodiment, scrapers 41 are installed in a turnable state in positions each sandwiched between the end plate 51 and the lubricant tank 55, and two side seals 42 extending in the longitudinal direction are installed on a surface of the slider main-body portion 22 on the side thereof on which the wheels 31 are installed. The scraper 41 is placed in a turnable state as a result of being fitted into a section in which the greasing nipple 52 and the lubricant tank 55 are joined to each other. Meanwhile, the two side seals 42 are placed in a fixed state as a result of left and right ends in the longitudinal direction thereof being pressed by the end plates 51 in a state in which the two side seals 42 are inserted into the slider main-body portion 22 on the rear surface side of the slider main-body portion 22. The scrapers 41 and the side seals 42 are both installed for the purpose of preventing foreign matters such as dust from entering the inner space 15 in which the wheels 31 are disposed and the wheel upper-side rolling surface 13a and the wheel lower-side rolling surface 14a are formed, and the scrapers 41 and the side seals 42 contribute to the maintenance of the stable operation state of the rolling guide device 10 according to the present embodiment.

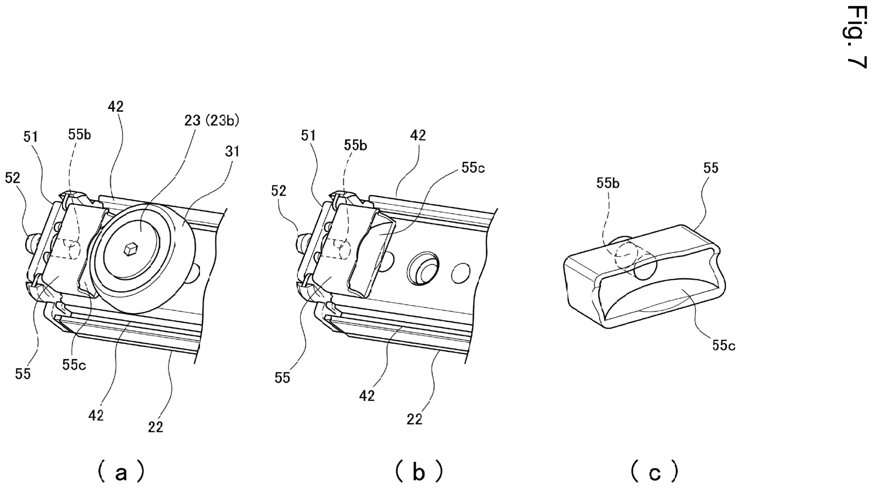

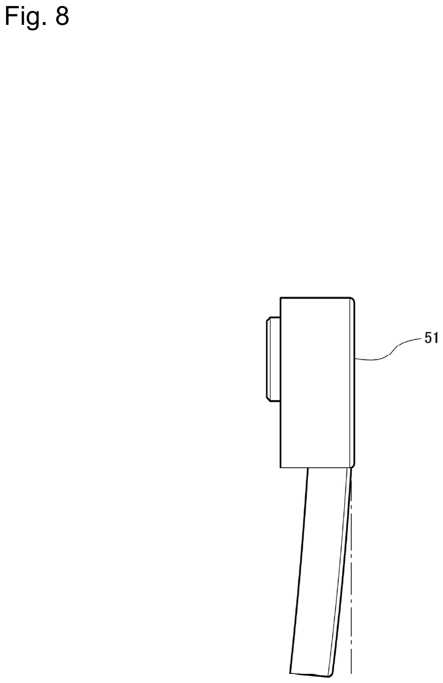

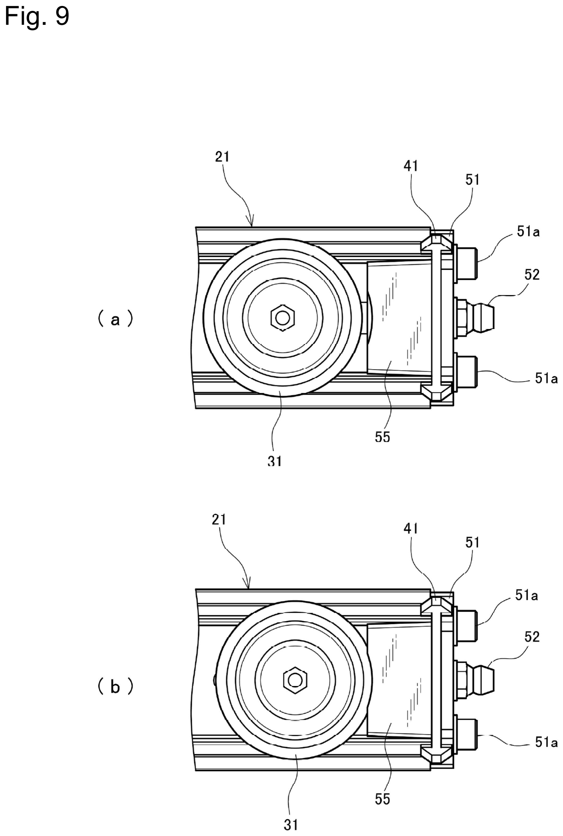

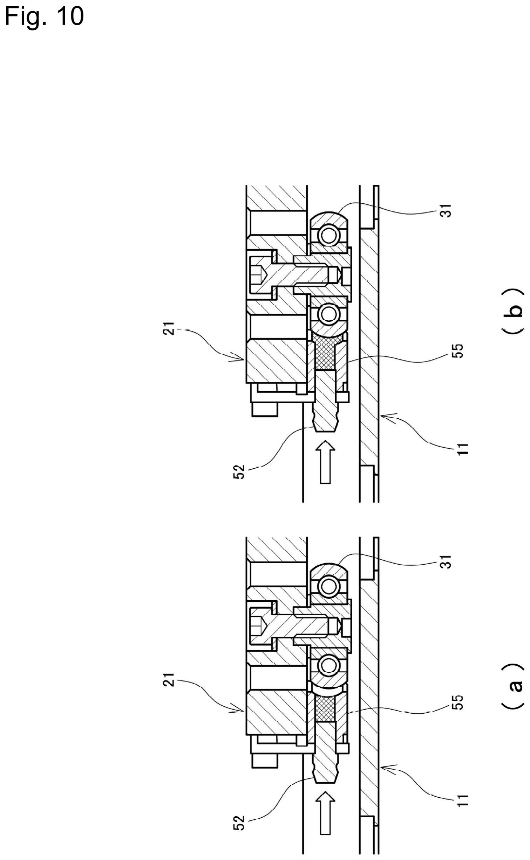

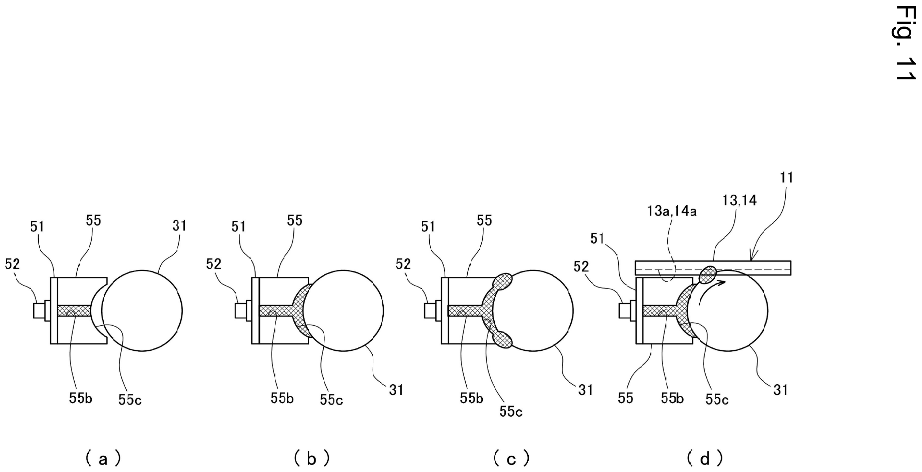

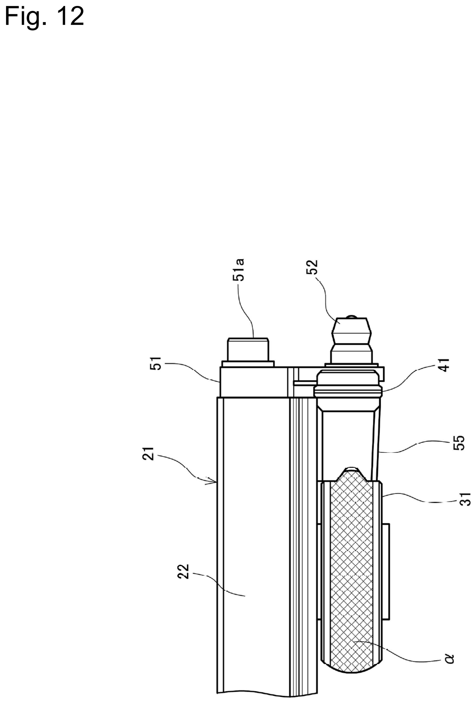

A basic configuration of the rolling guide device 10 according to the present embodiment has been described above. Next, a main part configuration of the rolling guide device 10 according to the present embodiment is described by adding Fig. 7 to Fig. 12 to the reference drawings. Here, Fig. 7 is a diagram for describing a configuration of the lubricant tank according to the present embodiment in which Fig. 7(a) is a partial perspective view showing a section around where the lubricant tank is installed in the rolling guide device according to the present embodiment, Fig. 7(b) is a partial perspective view showing a state in which the wheel is removed from Fig. 7(a), and Fig. 7(c) is a perspective view showing the lubricant tank according to the present embodiment by itself. Fig. 8 is a bottom view showing how the end plate according to the present embodiment is elastically deformed. Fig. 9 is a partial rear view for describing how the end plate is elastically deformed and the lubricant tank comes into contact with the wheel in the rolling guide device according to the present embodiment in which Fig. 9(a) shows a state before the end plate is elastically deformed and Fig. 9(b) shows a state after the end plate is elastically deformed. Fig. 10 is a transverse sectional view for describing a state in which lubricant is applied to the wheel from the lubricant tank in the rolling guide device according to the present embodiment, and Fig. 11 is a schematic view of a state in which the lubricant is applied to the wheel from the lubricant tank in the rolling guide device according to the present embodiment viewed from the lower surface side. Fig. 10(a) in Fig. 10 and Fig. 11(a) in Fig. 11 are corresponding diagrams showing the same state, and Fig. 10(b) in Fig. 10 and Fig. 11(b) in Fig. 11 are corresponding diagrams showing the same state. Fig. 12 is a partial bottom view showing a main part of the moving slider for describing an effect of the end plate and the lubricant tank included in the rolling guide device according to the present embodiment.

As shown in Fig. 9(a), the lubricant tank 55 according to the present embodiment is disposed so as to constantly have a gap between the lubricant tank 55 and the wheel 31. In the present embodiment, the end plate 51 to which the lubricant tank 55 is attached is configured by a material with low elastic modulus such as plastic resin, and hence is a member that is easily elastically deformed upon receiving an external force as shown in Fig. 8. Therefore, regarding the lubricant tank 55 fixed to the end plate 51, as shown in Fig. 9(b), when the user performs lubricant charging by pressing a grease gun (not shown) against the greasing nipple 52, the end plate 51 is elastically deformed by the pressing force of the grease gun (not shown), and the lubricant tank 55 and the wheel 31 are placed in a state of being in gapless contact with each other. In other words, when the user presses the grease gun (not shown) against the greasing nipple 52 from the right side of the plane of the paper toward the left side of the plane of the paper from an initial state in Fig. 9(a) shown in Fig. 9, the end plate 51 that has received the pressing force is elastically deformed, and the lubricant tank 55 and the wheel 31 are placed in the state in Fig. 9(b) of being in gapless contact with each other. When the user supplies the lubricant by operating the grease gun (not shown) in the state in Fig. 9(b), the lubricant is applied to the wheels 31 in a state in which the lubricant tank 55 and the wheel 31 are in contact with each other.

As it is obvious when Fig. 6 and Fig. 7 are referred to in contrast to each other, the lubricant tank 55 according to the present embodiment has a hole-shaped portion 55b that is continuous from the attachment hole 55a in the greasing nipple 52, and a groove-shaped portion 55c formed to be continuous from the hole-shaped portion 55b.

The hole-shaped portion 55b is a section that exhibits a function that guides the lubricant supplied via the greasing nipple 52 toward the groove-shaped portion 55c. The groove-shaped portion 55c is a section that exhibits a function that forms a space for a lubricant reservoir between the lubricant tank 55 and the wheel 31 when the lubricant tank 55 comes into contact with the wheel 31. More specifically, the groove-shaped portion 55c is a section in which an inlet open to the wheel 31 side is formed as a groove shape along the shape of the wheel 31.

Here, with reference to Fig. 10 and Fig. 11, when a state in which the lubricant is applied to the wheels 31 from the lubricant tank 55 is described, the following is performed. As described above, when the user presses the grease gun (not shown) against the greasing nipple 52, the end plate 51 that has received the pressing force is elastically deformed, and the lubricant tank 55 and the wheel 31 are placed in a state of being in gapless contact with each other. However, the contact state between the lubricant tank 55 and the wheel 31 does not necessarily need to be a state that is fully in close contact. When the user supplies lubricant by operating the grease gun (not shown) from this state, the lubricant is first guided into the hole-shaped portion 55b of the lubricant tank 55 in a state in which the lubricant tank 55 and the wheel 31 are in contact with each other (see the states in Fig. 10(a) and Fig. 11(a)). When lubricant is further supplied from this state, the lubricant is also charged into the groove-shaped portion 55c that forms the space between the lubricant tank 55 and the wheel 31 in the contact state, and hence a state in which a lubricant reservoir is formed between the lubricant tank 55 and the wheel 31 is obtained (see the states in Fig. 10(b) and Fig. 11(b)).

At this time, as also shown in Fig. 9(b) and the like, regarding the groove shape of the groove-shaped portion 55c formed in the lubricant tank 55, the inlet of the groove-shaped portion 55c open to the wheel 31 side is provided along the shape of the wheel 31 such that the lubricant flows along the rolling direction of the wheel 31 when the lubricant tank 55 comes into contact with the wheel 31, and the lubricant tank 55 and the wheel 31 are in gapless contact with each other in a direction perpendicular to the rolling direction of the wheel 31 such that the lubricant does not leak out. Meanwhile, an opening sufficient to discharge lubricant is formed between the lubricant tank 55 and the wheel 31 in a direction along the rolling direction of the wheel 31. Therefore, as shown in Fig. 11(c), the lubricant charged in the groove-shaped portion 55c leaks out only in the direction along the rolling-body outer circumferential surface of the wheel 31.

When the rolling operation of the wheel 31 is performed in a state shown in Fig. 11(c), only the lubricant that has leaked out from the lubricant reservoir formed between the lubricant tank 55 and the wheel 31 is applied to the rolling-body outer circumferential surface of the wheel 31 and the wheel upper-side rolling surface 13a or the rolling-body outer circumferential surface of the wheel 31 and the wheel lower-side rolling surface 14a (see the state in Fig. 11(d)). The state shown in Fig. 11(d) indicates that the lubricant is efficiently applied to only a cross-hatched section indicated by character α in Fig. 12, in other words, a section along the rolling-body outer circumferential surface of the wheel 31. This state indicates that that it is possible to maintain the stable operation state of the rolling guide device 10 by applying a suitable amount of lubricant to a suitable section of the wheel 31, and that the rolling guide device 10 that is excellent in terms of environment and operational cost can be realized by eliminating waste of the applied lubricant. The structure of the component parts (the end plate 51, the greasing nipple 52, and the lubricant tank 55) for applying lubricant included in the rolling guide device 10 according to the present embodiment is extremely simplified, and hence the manufacturing cost can be reduced as compared to the related-art.

A suitable embodiment of the present invention has been described above, but the technical scope of the present invention is not limited to the scope described in the embodiment described above. Various modifications or improvements can be made in the embodiment described above.

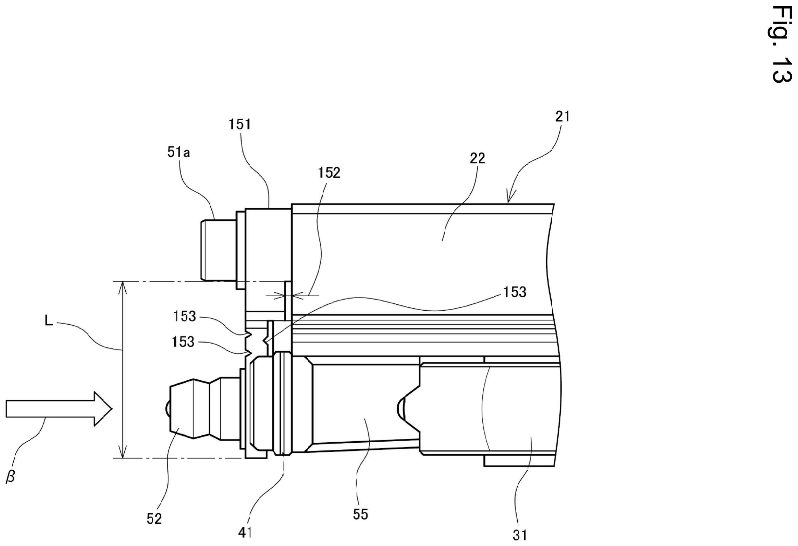

For example, a case in which the end plate 51 according to the embodiment described above is configured by a material with low elastic modulus such as plastic resin has been exemplified. However, various improvements can be applied to realize a more suitable elastic deformation for the end plate of the present invention. Fig. 13 is shown as a diagram exemplifying an improved structure of the end plate as above. Here, Fig. 13 is a view exemplifying an improved structure applicable to the end plate according to the present invention.

As shown in Fig. 13, an end plate 151 according to an improved form of the present invention is fixed to an installation section with respect to an end portion of the moving slider 21 in the longitudinal direction thereof in a state of having a deformation gap 152 for elastic deformation. By providing the deformation gap 152, a length (L) of a section that functions as a beam other than the fixing section in the end plate 151 becomes longer. Therefore, even when a pressing force β from the outer side is small, the end plate 151 is easily elastically deformed, and hence it is possible to stably and reliably maintain a state in which the lubricant tank 55 and the wheel 31 are in contact with each other.

For example, as shown in Fig. 13, a deformation groove 153 for elastic deformation can be formed in an outer front surface of the end plate 151 according to the improved form of the present invention. By forming the deformation groove 153 in the outer front surface of the end plate 151, it is possible for the end plate 151 to be easily elastically deformed. As a result, it is possible to stably and reliably maintain a state in which the lubricant tank 55 and the wheel 31 are in contact with each other. The number of the deformation grooves 153 to be formed may be one or plural. The position in which the deformation groove 153 is formed only needs to be freely selected in accordance with the shape of the end plate 151.

It is clear from the description in the claims that forms obtained by adding modifications or improvements as above may also be included in the technical scope of the present invention.

### REFERENCE NUMERALS

10 Rolling guide device, 11 Track rail (track member), 12 Attachment surface portion, 12a Attachment hole, 13 Upper wall portion (wall portion), 13a Wheel upper-side rolling surface (rolling-body rolling surface), 14 Lower wall portion (wall portion), 14a Wheel lower-side rolling surface (rolling-body rolling surface), 15 Inner space (inside of space), 21 Moving slider (moving member), 22 Slider main-body portion, 23 Attachment pin, 23a Eccentric attachment pin (eccentric shaft), 23b Fixing attachment pin, 24 Bolt, 31 Wheel (rolling body), 41 Scraper, 42 Side seal, 51 End plate, 51a Bolt, 51b Attachment hole, 52 Greasing nipple, 52a External thread, 55 Lubricant tank, 55a Attachment hole, 55b Hole-shaped portion, 55c Groove-shaped portion, 151 End plate, 152 Deformation gap, 153 Deformation groove, α Section (lubricant applying region) along rolling-body outer circumferential surface of wheel, β Pressing force from outer side, L length of section that functions as beam other than fixing section in end plate.

## Claims

1. A rolling guide device, comprising:
a track member that is a long member extending in a longitudinal direction, the track member being formed by:
an attachment surface portion serving as an attachment reference with respect to an external member; and
a pair of wall portions installed upright toward one side from each of both ends of the attachment surface portion;
a moving member installed to be movable in a reciprocal manner along the longitudinal direction of the track member; and
a plurality of rolling bodies that guide a relative reciprocal movement of the moving member with respect to the track member by being rollably disposed in a space surrounded by the attachment surface portion and the pair of wall portions forming the track member and between the track member and the moving member, the pair of wall portions having wall surfaces facing each other, the wall surfaces each having a rolling-body rolling surface formed in the wall surfaces, the rolling-body rolling surface coming into contact with a rolling-body outer circumferential surface of each of the rolling bodies, wherein:
a plate-shaped end plate, a greasing nipple attached to an outer surface side of the end plate, and a lubricant tank attached to an inner surface side of the end plate are installed on an end portion of the moving member in a longitudinal direction of the moving member;
the lubricant tank constantly has a gap between the lubricant tank and the rolling body; and
lubricant is applied, when a user performs lubricant charging by pressing a grease gun against the greasing nipple, to the rolling body in a state in which the lubricant tank and the rolling body are in gapless contact with each other by the end plate being elastically deformed by a pressing force of the grease gun.

2. The rolling guide device according to claim 1, wherein the lubricant tank has a groove-shaped portion that forms a lubricant reservoir between the groove-shaped portion and the rolling body when the lubricant tank is in contact with the rolling body.

3. The rolling guide device according to claim 1 or 2, wherein the end plate is fixed to an installation section with respect to an end portion of the moving member in the longitudinal direction of the moving member in a state of having a deformation gap for elastic deformation.

4. The rolling guide device according to claim 1 or 2, wherein the end plate has a deformation groove for elastic deformation on an outer front surface.
